# EUROPÄISCHE PATENTSCHRIFT

(11) **EP 2 976 247 B1**
(45) Veröffentlichungstag und Bekanntmachung des Hinweises auf die Patenterteilung: **10.05.2017**
(21) Anmeldenummer: 14707115.3
(22) Anmeldetag: 18.02.2014
(51) Int. Cl.: B62D 11/14

(54) **ANTRIEBSEINRICHTUNG FÜR EIN KETTENFAHRZEUG**
PROPULSION ARRANGEMENT FOR ENDLESS TRACK VEHICLE
ARRANGEMENT DE PROPULSION POUR UN VÉHICULE CHENILLÉ

(30) Priorität: 18.03.2013 DE 102013204672
(43) Veröffentlichungstag der Anmeldung: 27.01.2016
(73) Patentinhaber: ZF Friedrichshafen AG, 88046 Friedrichshafen (DE)
(72) Erfinder: SONNENBURG, Henning, 88214 Ravensburg (DE); BOSS, Ralf, 88079 Kressbronn (DE)
(86) Internationale Anmeldenummer: PCT/EP2014/053050
(87) Internationale Veröffentlichungsnummer: WO 2014/146838

(56) Entgegenhaltungen:
- WO-A1-02/083482
- WO-A1-2009/013454
- US-A- 1 991 094
- US-A- 4 998 591
- US-A- 5 195 600

## Beschreibung

Die Erfindung betrifft eine Antriebseinrichtung für ein Kettenfahrzeug mit einem elektrischen Fahrmotor und einem elektrischen Lenkmotor, wobei eine mechanische Verbindung zur Übertragung der Blindleistung bei Kurvenfahrt besteht.
Zur Kurvenfahrt wird bei Kettenfahrzeugen die Kette auf der kurvenäußeren Fahrzeugseite schneller angetrieben als die Kette auf der kurveninneren Fahrzeugseite. Die mechanische Leistung an der kurvenäußeren Kette ist dabei um ein Vielfaches höher als an der kurveninneren Kette. Dadurch entsteht eine sogenannte Blindleistung, die zwischen der kurveninneren und der kurvenäußeren Fahrzeugseite zirkuliert. Bei konventionell angetriebenen Kettenfahrzeugen mit Verbrennungsmotor und Lenkschaltgetriebe zirkuliert diese Blindleistung von der kurvenäußeren Kette über den Untergrund zur kurveninneren Kette und dann über Querwellen, nämlich eine Null- und eine Zentralwelle, wieder zur kurvenäußeren Kette.
Es sind bereits verschiedene elektromotorische Antriebseinrichtungen für Kettenfahrzeuge bekannt. Die elektrische Energie für die Elektromotoren wird dabei beispielsweise von einem Generator bereitgestellt, der von einem Verbrennungsmotor angetrieben wird. Eine konstruktiv einfache Ausführung einer elektromotorischen Antriebseinrichtung für Kettenfahrzeuge besteht darin, jede der beiden Ketten mit einem separaten Elektromotor direkt anzutreiben. Dabei stellt jeder Elektromotor sowohl die Fahrleistung als auch die Lenkleistung für die zugeordnete Fahrzeugseite bzw. Kette bereit. Dies hat jedoch den Nachteil, dass die Blindleistung bei Kurvenfahrt nicht über eine mechanische Verbindung, wie beispielsweise die Querwellen, übertragen werden kann und deshalb von den Elektromotoren bereitgestellt werden muss. Dadurch müssen die Elektromotoren bei einer derartigen Antriebseinrichtung extrem überdimensioniert werden, was zu höheren Kosten und zu einem höheren Fahrzeuggewicht führt. Die US-A-4 998 591 offenbart eine Antriebseinrichtung für ein Kettenfahrzeug mit den Merkmalen des Oberbegriffs des Anspruchs 1. Aus der DE 60206481 T2 ist eine Antriebskonfigurationen für Kettenfahrzeuge bekannt, die den beschriebenen Nachteil der überdimensionierten elektrischen Fahrmotoren vermeidet. Dies wird dadurch erreicht, dass eine herkömmliche Antriebseinrichtung mit einer Null- und einer Zentralwelle derart verändert wird, dass ein elektrischer Fahrmotor auf der Zentralwelle angeordnet wird und diese antreibt, und dass ein elektrischer Lenkmotor auf der Nullwelle angeordnet wird und diese antreibt. So kann die beschriebene Blindleistung bei Kurvenfahrt durch mechanische Antriebselemente, im Wesentlichen bestehend aus der Nullwelle und der Zentralwelle, von der kurvenäußeren Kette zur kurveninneren Kette übertragen werden.

Daneben sind noch weitere elektromotorische Antriebseinrichtungen für Kettenfahrzeuge bekannt, bei denen die Blindleistung bei Kurvenfahrt über mechanische Antriebselemente von der einen Antriebsseite zur anderen Antriebsseite übertragen wird. Beispielsweise beschreibt die WO 2009/013454 A1 eine Antriebseinrichtung für Kettenfahrzeuge mit je einem elektrischen Fahrmotor und mit je einem elektrischen Lenkmotor für jede Antriebsseite bzw. Kette. Die beiden Fahrmotoren treiben dabei je eine Antriebswelle an, die jeweils die zugeordnete Kette auf einer Antriebsseite des Kettenfahrzeugs antreiben. Zur Kurvenfahrt wird eine Lenkleistung bzw. eine Lenkdrehbewegung von den Lenkmotoren über ein zentral angeordnetes Differentialgetriebe auf die beiden Antriebswellen geleitet. Auch hier lässt sich also die Blindleistung bei Kurvenfahrt über mechanische Antriebselemente abstützen, nämlich über das Differentialgetriebe.

Alle oben beschriebenen elektrischen Antriebseinrichtungen erfordern jedoch verhältnismäßig hohe elektrische Leistungen und nehmen deshalb im Kettenfahrzeug verhältnismäßig viel Bauraum ein, der dadurch nicht mehr als Zugangs- oder Laderaum zur Verfügung steht. Zudem erhöhen sich mit der erforderlichen elektrischen Antriebsleistung das Gesamtgewicht und die Betriebskosten des Kettenfahrzeugs.

Die der Erfindung zugrundeliegende Aufgabe wird durch eine Antriebseinrichtung gemäß Anspruch 1 gelöst. Vorteilhafte Weiterbildungen sind in den abhängigen Ansprüchen beansprucht.

Demnach wird eine Antriebseinrichtung für ein Kettenfahrzeug beansprucht, die einen elektrischen Fahrmotor zum Bereitstellen einer Fahrleistung und einen elektrischen Lenkmotor zum Bereitstellen einer Lenkleistung umfasst. Des Weiteren umfasst die beanspruchte Antriebseinrichtung mechanische Antriebselemente zur Übertragung einer Blindleistung zwischen einer rechten und einer linken Antriebsseite bzw. Kette bei Kurvenfahrt. Erfindungsgemäß ist ein elektrischer Unterstützungsmotor vorgesehen, der wahlweise den Fahrmotor oder den Lenkmotor unterstützen kann. Das bedeutet, dass, je nach Bedarf, das Drehmoment des Fahrmotors und das Drehmoment des Unterstützungsmotors für den Fahrantrieb verfügbar sind, oder dass für das Lenken das Drehmoment des Lenkmotors und das Drehmoment des Unterstützungsmotors verfügbar sind.

Der Unterstützungsmotor ist also wahlweise dem Kraftfluss des Fahrmotors oder dem Kraftfluss des Lenkmotors zuschaltbar, je nachdem zu welchem Zweck in der bestimmten Fahrsituation die größte Leistung benötigt wird. Beispielsweise kann der Unterstützungsmotor zur schnellen Geradeausfahrt dem Fahrmotor zugeschaltet werden, um so eine Höchstgeschwindigkeit zu erzielen. Zum Fahren mit kleinen Kurvenradien wird dagegen eine sehr hohe Lenkleistung benötigt. Die höchste Lenkleistung wird beim sogenannten Pivot benötigt, d.h. beim Wenden des Kettenfahrzeugs um seine Hochachse. Dabei dreht die Kette auf der rechten Antriebsseite vorwärts und die Kette auf der linken Antriebsseite rückwärts oder umgekehrt. Der Fahrantrieb steht währenddessen still. Auch das Wenden um eine Kette erfordert eine sehr hohe Lenkleistung. Deshalb wird der Unterstützungsmotor beim Pivot, beim Wenden um eine Kette und zum Fahren von kleinen Kurvenradien vorteilhaft dem Kraftfluss des Lenkmotors zugeschaltet.

Wegen der bedarfsweisen Unterstützung durch den Unterstützungsmotor können der Fahr- und der Lenkmotor leistungsschwächer und kleiner ausgeführt werden als bei herkömmlichen elektromechanischen Antriebseinrichtungen für Kettenfahrzeugen, bei denen der Fahrmotor allein die maximale Fahrleistung und ein Lenkmotor allein die maximale Lenkleistung bereitstellen muss. Erfindungsgemäss weist die Antriebseinrichtung eine Kupplung auf, mit welcher der Unterstützungsmotor wahlweise in einer ersten Schaltstellung dem Kraftfluss des Fahrmotors oder in einer zweiten Schaltstellung dem Kraftfluss des Lenkmotors zuschaltbar ist. Eine dafür geeignete Kupplung ist insbesondere eine einfache, formschlüssig wirkende Kupplung. Um das Schalten der Kupplung zu erleichtern und zu beschleunigen kann die Kupplung mit einer Synchronisierungseinrichtung ausgestattet sein. Eine andere Möglichkeit zum Verbessern des Schaltvorganges an der Kupplung besteht mit einer Steuereinrichtung. Mit Hilfe der Steuereinrichtung kann die Drehzahl des Unterstützungsmotors derart angepasst werden, dass eine formschlüssig wirkende Kupplung auch ohne Synchronisierungseinrichtung schnell und problemlos geschaltet werden kann. Es sind aber auch andere Kupplungsarten, wie beispielsweise reibschlüssige Kupplungen mit und ohne Synchronisierungseinrichtung einsetzbar.
Vorzugsweise weist die Kupplung neben der beschriebenen ersten und zweiten Schaltstellung eine dritte neutrale Schaltstellung auf, in der der Unterstützungsmotor vom Rest der Antriebseinrichtung entkoppelt ist. In der dritten neutralen Schaltstellung treibt also nur der Fahrmotor beide Ketten zum Vorwärts- bzw. Rückwärtsfahren an, während nur der Lenkmotor erforderlichenfalls Drehbewegungen zum Lenken des Kettenfahrzeugs bewirkt. Der Unterstützungsmotor hat in der dritten neutralen Schaltstellung weder einen Einfluss auf den Fahrantrieb noch auf das Lenken. Vorteilhafterweise liegt die dritte neutrale Schaltstellung der Kupplung zwischen der ersten und der zweiten Schaltstellung, sodass eine gleichzeitige mechanische Verbindung zwischen der Zentralwelle und der Nullwelle über die Kupplung konstruktionsbedingt ausgeschlossen ist.

Erfindungsgemäss umfasst die mechanische Verbindung eine von dem Fahrmotor antreibbare Zentralwelle und eine von dem Lenkmotor antreibbare Nullwelle. Die über die Zentralwelle und die Nullwelle laufenden Kraftflüsse werden auf jeder Antriebsseite in jeweils einem Summierungsgetriebe zusammengeführt, um über jeweils ein Abtriebselement der Summierungsgetriebe die jeweilige Kette anzutreiben. Die Summierungsgetriebe werden als Einzelkomponenten beispielsweise an einer Fahrzeugwanne angeschraubt. Um vorhandene Toleranzen und betriebsbedingte Relativbewegungen zwischen den Summierungsgetrieben auszugleichen, können die damit verbundenen Querwellen, nämlich die Zentralwelle und die Nullwelle flexibel, insbesondere als Gelenkwellen ausgeführt sein.

Die Zentralwelle und die Nullwelle können bevorzugt in Fahrtrichtung hintereinander und zumindest nahezu auf gleicher Höhe im Bereich eines Fahrzeugbodens angeordnet sein, um einen freien bzw. möglichst großen Durchstieg in den Innenraum des Kettenfahrzeuges zu ermöglichen. Bei der bodennahen Anordnung der Querwellen sind die Durchmesser der Zahnräder auf den Querwellen und die Durchmesser der mit den Querwellen verbundenen elektrischen Fahr- und Lenkmotoren zu beachten. Erforderlichenfalls kann durch eine zusätzliche Stirnradstufe ein Achsversatz zwischen dem Fahrmotor und der Zentralwelle bzw. zwischen dem Lenkmotor und der Nullwelle erreicht werden.

Die Summierungsgetriebe sind vorzugsweise als Planetengetriebe ausgeführt. Dabei sind die Hohlräder der Planetengetriebe mit der Zentralwelle verbunden, sodass der Kraftfluss für den Fahrtantrieb über das Hohlrad des jeweiligen Planetengetriebes in das Summierungsgetriebe eingeleitet wird. Der Planetenträger bildet das Abtriebselement des jeweiligen Summierungsgetriebes und ist mit der zugeordneten Kette auf derselben Antriebsseite wirkverbunden. Das Sonnenrad des jeweiligen Summierungsgetriebes ist über die Nullwelle und andere Getriebeelemente mit dem Sonnenrad des auf der anderen Antriebsseite angeordneten Summierungsgetriebes verbunden. Diese mechanische Verbindung zwischen der rechten und der linken Antriebsseite wird in dieser Schrift als Lenktriebstrang bezeichnet.

Zum Lenken des Kettenfahrzeuges ist es erforderlich, dass die Kette auf der kurvenäußeren Antriebsseite schneller angetrieben wird als die Kette auf der kurveninneren Antriebsseite. Dies wird bei der Kurvenfahrt dadurch erreicht, indem der Lenkmotor über die Nullwelle das Sonnenrad des Summierungsgetriebes auf der kurvenäußeren Antriebsseite in derselben Drehrichtung antreibt wie das dortige Hohlrad von dem Fahrmotor über die Zentralwelle angetrieben wird, und indem das Sonnenrad auf der kurveninneren Antriebsseite gleichzeitig von dem Lenkmotor in der entgegengesetzten Drehrichtung angetrieben wird wie das dazugehörige Hohlrad von dem Fahrmotor über die Zentralwelle angetrieben wird. Zum Pivot stehen die Hohlräder still und nur die Sonnenräder, die Planetenräder und die Planetenträger der beiden Summierungsgetriebe drehen sich auf der linken und der rechten Antriebsseite in entgegengesetzter Drehrichtung.

Die entgegengesetzte Drehrichtung der Sonnenräder der beiden Summierungsgetriebe wird erreicht, indem in dem Lenktriebstrang auf einer Antriebsseite ein zusätzliches Zahnrad angeordnet ist, das die Drehrichtung auf dieser Antriebsseite umkehrt. Mit anderen Worten kehrt das zusätzliche Zahnrad die Lenkdrehbewegung der Nullwelle auf der einen Antriebsseite gegenüber der Lenkdrehbewegung auf der anderen Antriebsseite um. Deshalb wird das zusätzliche Zahnrad in dieser Schrift als Umkehrzahnrad bezeichnet.

Damit die Sonnenräder der Summierungsgetriebe bei Geradeausfahrt auch ohne Unterstützung still stehen und keine Lenkdrehbewegungen bewirken, stützen sie sich gegenseitig über die Nullwelle ab. Dabei heben sich die Abstützmomente der rechten und der linken Antriebsseite gegenseitig auf.

Der Lenkmotor ist bevorzugt an dem beschriebenen Umkehrzahnrad angeordnet, das im Kraftfluss zwischen der Nullwelle und einem der beiden Summierungsgetriebe angeordnet ist. Dadurch ist der Leistungsbedarf in der einen Drehrichtung des Lenkmotors zumindest annähernd gleich groß wie der Leistungsbedarf in die andere Drehrichtung. Dies trägt zu der angestrebten Reduzierung des Leistungsbedarfs am Lenkmotor bei.

Weitere bevorzugte Ausführungen der Erfindung zielen darauf ab, den benötigten Bauraum für die gesamte Antriebseinrichtung möglichst gering zu halten und die einzelnen Antriebskomponenten räumlich derart anzuordnen, dass der Bauraum möglichst günstig ausgenutzt wird, sodass beispielsweise ein möglichst großer Durchgang für einen Heckeinstieg bei einem heckangetriebenen Kettenfahrzeug erreicht wird. Ein heckseitiger Kettenantrieb ist im Hinblick auf die Kettenbeanspruchung und den Kettenverschleiß vorteilhaft. Trotzdem soll ein geschützter Zustieg der Besatzung von hinten bzw. heckseitig möglich sein, wie dies bei militärischen Kettenfahrzeugen gewünscht wird. Im Rahmen der vorliegenden Erfindung können beispielsweise die elektrischen Motoren seitlich im Bereich der Summierungsgetriebe angeordnet werden, sodass der mittlere Bereich für einen Heckeinstieg genutzt werden kann.

Eine weitere dieser bevorzugten Ausführungen sieht vor, dass der Unterstützungsmotor auf der dem Lenkmotor gegenüberliegenden Antriebsseite angeordnet ist. Bei einer anderen Ausführung ist die Kupplung vorzugsweise räumlich zwischen einem fest mit der Nullwelle verbundenen Zahnrad und einem im Kraftfluss der Zentralwelle liegenden Zahnrad ebenfalls im seitlichen Bereich eines Summierungsgetriebes angeordnet.

Die beanspruchte Antriebseinrichtung kann vorzugsweise mit Hilfe einer beispielsweise elektrischen Steuereinrichtung angesteuert werden. Die Steuereinrichtung kann die Antriebseinrichtung abhängig von einer Lenkhändelstellung und einer Fahrpedalstellung derart steuern, dass der beschriebene Unterstützungsmotor entweder den Fahrmotor oder den Lenkmotor unterstützt. Damit kann das Drehmoment des Unterstützungsmotors situationsabhängig zur Unterstützung des Fahrmotors oder zur Unterstützung des Lenkmotors zur Verfügung gestellt werden. Dazu kann die Steuereinrichtung die oben beschriebene Kupplung ansteuern und mit Hilfe entsprechender Betätigungselemente der Kupplung in die erste, zweite oder dritte Schaltstellung schalten.

Die Steuerung mittels der Steuereinrichtung wird derart durchgeführt, dass eine zuverlässige Lenkung des Kettenfahrzeuges in jeder Fahrsituation gewährleistet ist. Dadurch kann beispielsweise die Beschleunigung während der Kurvenfahrt geringer sein als bei Geradeausfahrt, weil dabei der Unterstützungsmotor dem Lenkmotor zugeschaltet ist und dem Fahrmotor keine zusätzliche Leistung zur Verfügung steht.

Schließlich umfasst die vorliegende Erfindung auch ein Kettenfahrzeug, bei dem eine Antriebseinrichtung wie oben beschrieben als Heckantrieb im Heckbereich des Fahrzeuges angeordnet ist.

Die Erfindung und weitere Vorteile werden nachfolgend anhand einer schematischen Zeichnung näher erläutert.

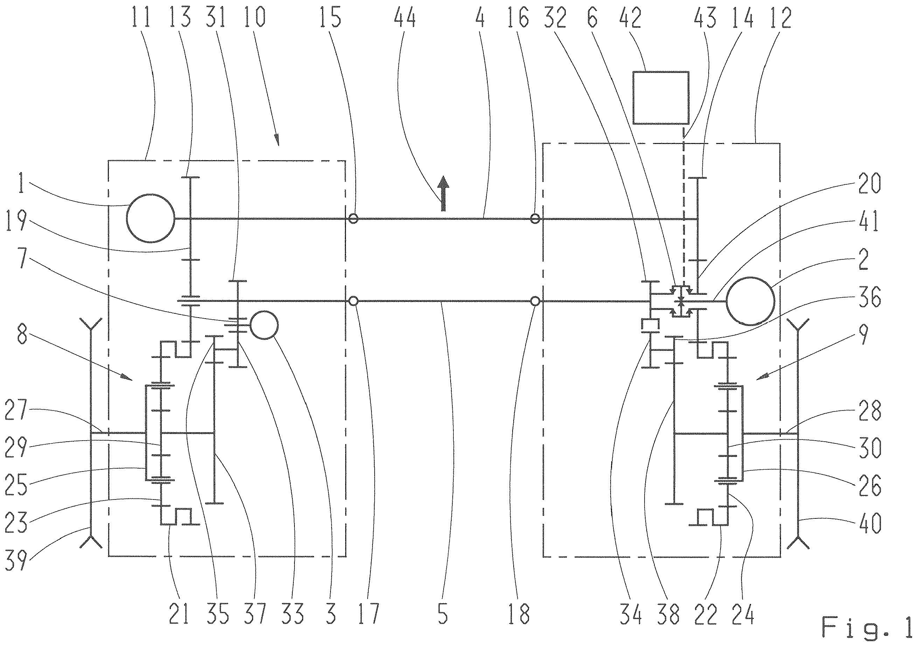

Die Fig. 1 zeigt den schematischen Aufbau eines Ausführungsbeispiels der erfindungsgemäßen Antriebseinrichtung.

Die erfindungsgemäße Antriebseinrichtung 10 umfasst eine linke Antriebsseite 11 und eine rechte Antriebsseite 12. Zwei Querwellen, nämlich die Zentralwelle 4 und die Nullwelle 5, verbinden die beiden Antriebsseiten 11 und 12 miteinander und bilden so eine mechanische Verbindung der Antriebseinrichtung zwischen der linken und der rechten Antriebsseite 11 und 12. Anhand des Fahrtrichtungspfeiles 44 ist erkennbar, dass die Zentralwelle 4 und die Nullwelle 5 in Fahrtrichtung hintereinander angeordnet sind. Dies ermöglicht die Anordnung der beiden Querwellen 4, 5 auf der gleichen Höhe nahe am Fahrzeugboden. Insbesondere zusammen mit einer vorteilhaften Anordnung der im Folgenden näher beschriebenen elektrischen Motoren 1, 2 und 3 ermöglicht dies einen freien Durchgang in das Fahrzeuginnere für einen Heckeinstieg bei einem heckangetriebenen Kettenfahrzeug.

Der elektrische Fahrmotor 1 zum Bereitstellen der Fahrleistung ist auf der linken Antriebsseite 11 angeordnet. Der elektrische Fahrmotor 1 ist antriebsverbunden mit der Zentralwelle 4. Die Zentralwelle 4 ist als Gelenkwelle ausgebildet, um Toleranzen und Relativbewegungen zwischen der linken und der rechten Antriebsseite 11 und 12 bzw. zwischen dem linken und dem rechten Summierungsgetriebe 8 und 9 ausgleichen zu können. Dazu weist die Zentralwelle 4 zwei Gelenke 15 und 16 auf. Auf der Zentralwelle 4 sind zwei Zahnräder 13 und 14 befestigt, wobei das Zahnrad 13 auf der linken Antriebsseite 11 und das Zahnrad 14 auf der rechten Antriebsseite 12 angeordnet ist.

Das Zahnrad 13 kämmt auf der linken Antriebsseite 11 mit einem Zwischenrad 19. Das Zwischenrad 19 steht wiederum mit einem Hohlrad 21 antreibbar in Verbindung. Diese Verbindung kann beispielsweise durch eine am äußeren Umfang des Hohlrades 21 angeordnete Verzahnung realisiert werden. Das Hohlrad 21 ist Teil eines Summierungsgetriebes 8, das auf der linken Antriebsseite 11 angeordnet und in Form eines Planetengetriebes ausgeführt ist.

Die Planetenräder 23 des Summierungsgetriebes 8 sind außen im Zahneingriff mit einer Innenverzahnung des Hohlrades 21 und innen im Zahneingriff mit der Verzahnung eines Sonnenrades 29. Die Planetenräder 23 sind drehbar gelagert auf einem Planetenträger 25. Der Planetenträger 25 bildet das Abtriebselement des Summierungsgetriebes 8 und ist mit einer Antriebswelle 27 verbunden, die ein linkes Kettenantriebsrad 39 trägt, welches wiederum eine nicht dargestellte linke Kette des Kettenfahrzeuges antreibt.

Anstatt einer direkten Verbindung zwischen der Abtriebswelle 27 und 28 und den Kettenrädern 39 und 40, können auch weitere Untersetzungsgetriebe eingesetzt werden. Die so genannten Seitenvorgelege reduzieren die Momente in den Antriebseinheiten 11 und 12. Des Weiteren können auf den Abtriebswellen 27 und 28 auch Betriebs- und Feststellbremsen angeordnet werden.

Das Zahnrad 14 kämmt auf der rechten Antriebsseite 12 mit einem Zwischenrad 20. Das Zwischenrad 20 steht wiederum mit einem Hohlrad 22 antreibbar in Verbindung. Diese Verbindung kann beispielsweise durch eine am äußeren Umfang des Hohlrades 22 angeordnete Verzahnung realisiert werden. Das Hohlrad 22 ist Teil eines Summierungsgetriebes 9, das auf der rechten Antriebsseite 12 angeordnet und in Form eines Planetengetriebes ausgeführt ist.

Die Planetenräder 24 des Summierungsgetriebes 9 sind außen im Zahneingriff mit einer Innenverzahnung des Hohlrades 22 und innen im Zahneingriff mit der Verzahnung eines Sonnenrades 30. Die Planetenräder 24 sind drehbar gelagert auf einem Planetenträger 26. Der Planetenträger 26 bildet das Abtriebselement des Summierungsgetriebes 9 und ist mit einer Antriebswelle 28 verbunden, die ein rechtes Kettenantriebsrad 40 trägt, welches wiederum eine nicht dargestellte rechte Kette des Kettenfahrzeuges antreibt.

Anstatt einer direkten Verbindung zwischen der Abtriebswelle 27 und 28 und den Kettenrädern 39 und 40, können auch weitere Untersetzungsgetriebe eingesetzt werden. Die so genannten Seitenvorgelege reduzieren die Momente in den Antriebseinheiten 11 und 12. Des Weiteren können auf den Abtriebswellen 27 und 28 auch Betriebs- und Feststellbremsen angeordnet werden.

Die Sonnenräder 29 und 30 der beiden Summierungsgetriebe 8 und 9 sind über die Nullwelle 5 und andere Getriebeelemente mechanisch miteinander verbunden. Über diese mechanische Verbindung, die in dieser Schrift Lenktriebstrang genannt wird, wird zum einen die Lenkleistung eines Lenkmotors 3 zu den Kettenantriebsrädern 39 und 40 geleitet und zum anderen wird die eingangs beschriebene Blindleistung bei Kurvenfahrt über diese mechanische Verbindung geleitet. Die Nullwelle 5 ist als Gelenkwelle ausgebildet, um Toleranzen und Relativbewegungen zwischen der linken und der rechten Antriebsseite 11 und 12 bzw. zwischen dem linken und dem rechten Summierungsgetriebe 8 und 9 ausgleichen zu können. Dazu weist die Nullwelle zwei Gelenke 17 und 18 auf.

Im Lenktriebstrang ist auf der linken Antriebsseite 11 ein zusätzliches Zahnrad 7 angeordnet, das die Drehrichtung im Lenktriebstrang auf der linken Antriebsseite 11 gegenüber der Drehrichtung auf der rechten Antriebsseite 12 umkehrt. Deshalb wird das zusätzliche Zahnrad als Umkehrzahnrad 7 bezeichnet.

Ein elektrischer Lenkmotor 3, der die Leistung zum Lenken bereitstellt, ist auf der linken Antriebsseite 11 angeordnet. Die entsprechende Lenkdrehbewegung und das Drehmoment werden vom Lenkmotor 3 über den Lenktriebstrang mit der Nullwelle 5 zum jeweiligen Summierungsgetriebe 8 bzw. 9 auf der linken bzw. rechten Antriebsseite 11 und 12 geleitet. Der elektrische Lenkmotor 3 ist direkt an dem Umkehrzahnrad 7 angeordnet und leitet sein Drehmoment, das Lenkdrehmoment, über das Umkehrzahnrad 7 in den Lenktriebstrang ein.

Auf der linken Antriebsseite 11 wird die Lenkleistung des Lenkmotors 3 vom Umkehrzahnrad 7 über zwei starr miteinander verbundene weitere Zahnräder 33 und 35 auf ein Zahnrad 37 geleitet. Das Zahnrad 37 ist wiederum starr mit dem Sonnenrad 29 verbunden, über das die Lenkleistung in das als Planetengetriebe ausgeführte linke Summierungsgetriebe 8 eingeleitet wird. Das Umkehrzahnrad 7 steht also mit dem Zahnrad 33 im Eingriff und das Zahnrad 35 steht mit dem Zahnrad 37 im Eingriff.

Zur Übertragung der Lenkleistung des Lenkmotors 3 auf die rechte Antriebsseite 12 ist das Umkehrzahnrad 7 über das Zahnrad 31, die Nullwelle 5 und die Zahnräder 32, 34, 36 und 38 mit dem Sonnenrad 30 verbunden. Durch das Sonnenrad 3 wird die Lenkleistung in das als Planetengetriebe ausgeführte rechte Summierungsgetriebe 9 eingeleitet. Das Umkehrzahnrad 7 steht mit dem Zahnrad 31 im Eingriff, welches auf der linken Antriebsseite 11 auf der Nullwelle 5 befestigt ist. Ein auf der rechten Antriebsseite 12 fest mit der Nullwelle 5 verbundenes Zahnrad 32 kämmt mit dem Zahnrad 34, welches starr mit dem Zahnrad 36 verbunden ist. Das Zahnrad 36 kämmt wiederum mit Zahnrad 38, welches starr mit dem Sonnenrad 30 verbunden ist.

Die beschriebenen Zahnräder sind bevorzugt als gerad- oder schrägverzahnte Stirnräder ausgeführt.

Das Umkehrzahnrad 7 sorgt auch dafür, dass die Sonnenräder der Summierungsgetriebe bei Geradeausfahrt auch ohne Unterstützung still stehen und keine Lenkdrehbewegungen bewirken, weil sie sich gegenseitig über die Nullwelle abstützen. Dabei laufen die einander entgegen gerichteten Drehmomente von der rechten und der linken Antriebsseite 11 und 12 an dem Umkehrzahnrad 7 zusammen und die Abstützmomente der rechten und der linken Antriebsseite heben sich gegenseitig auf.

Ein elektrischer Unterstützungsmotor 2 ist auf der rechten Antriebsseite 12 vorgesehen. Er unterstützt wahlweise den Fahrmotor 1 oder den Lenkmotor 3. Die Drehbewegung und das Drehmoment des Unterstützungsmotors 2 werden über eine schaltbare Kupplung 6 entweder in den Fahrtriebstrang oder in den Lenktriebstrang eingeleitet, sodass der Unterstützungsmotor 2 wahlweise dem Kraftfluss des Fahrmotors 1 oder dem Kraftfluss des Lenkmotors 3 zuschaltbar ist. Die Kupplung 6 weist dazu drei Schaltstellungen auf. In einer ersten Schaltstellung ist die Abtriebswelle 41 des Unterstützungsmotors 2 antriebswirksam mit dem Fahrtriebstrang, also über die Zentralwelle 4 mit dem Fahrmotor 1, verbunden. In einer zweiten Schaltstellung ist die Abtriebswelle 41 des Unterstützungsmotors 2 antriebswirksam mit dem Lenktriebstrang, also über die Nullwelle 5 mit dem Lenkmotor 3, verbunden. Und in einer dritten Schaltstellung ist die Abtriebswelle 41 des Unterstützungsmotors 2 mit keinem der Triebstränge verbunden, sondern mechanisch vom Rest der Antriebseinrichtung 10 getrennt. Die dritte Schaltstellung wird daher auch Neutralstellung genannt.

Zur Ansteuerung der Kupplung 6 ist eine Steuereinrichtung 42 vorgesehen, die über eine Steuerleitung 43 mit einem nicht dargestellten Betätigungselement der Kupplung 6 verbunden ist. Mit Hilfe der Steuereinrichtung 42 kann die Kupplung 6 bedarfsabhängig umgeschaltet werden zwischen den beschriebenen drei Schaltstellungen. Der Steuereinrichtung 42 werden zuvor erfasste Daten zur aktuellen Lenkhändelstellung und der Fahrpedalstellung des Fahrzeuges zur Verfügung gestellt, sodass die Steuereinrichtung 42 abhängig davon die Kupplung 6 ansteuern und schalten kann. Bei der Steuereinrichtung 42 kann es sich beispielsweise um ein Steuergerät zur Steuerung des Antriebsstranges 10 oder um ein zentrales Steuergerät des Kettenfahrzeuges handeln.

Die in dem Ausführungsbeispiel beschriebene Anordnung der elektrischen Motoren 1, 2 und 3 kann im Rahmen der vorliegenden Erfindung auch geändert werden, solange die beschriebenen Antriebsverbindungen bestehen bleiben. Dies gibt dem Konstrukteur des Kettenfahrzeuges die Freiheit eine Anordnung zu wählen, bei der der benötigte Bauraum optimal ausgenutzt wird im Hinblick auf einen möglichst großen Durchgang als Heckeinstieg, auf einen möglichst großen Nutzraum im Inneren des Kettenfahrzeuges oder auf die Unterbringung anderer Aggregate in dem Kettenfahrzeug.

Es ist im Rahmen der Erfindung auch möglich anstatt genau einem Fahrmotor und genau einem Lenkmotor mehrere Fahr- und/oder Lenkmotoren vorzusehen, die mechanisch miteinander im Fahrtriebstrang bzw. im Lenktriebstrang verbunden sind, wobei der Unterstützungsmotor wahlweise dem Fahrtriebstrang oder dem Lenktriebstrang zugeschaltet wird. Dadurch ergibt sich eine noch höhere Freiheit in der möglichen Anordnung und Verteilung der elektrischen Motoren für die gesamte benötigte Fahrleistung und Lenkleistung. Überdies erhöhen mehrere Fahr- bzw. Lenkmotoren die Betriebssicherheit der Antriebseinrichtung durch die entstehenden Redundanzen.

Der Unterstützungsmotor 2 ist in der Lage, bei Ausfall des Antriebsmotors 1, den Fahrbetrieb eingeschränkt aufrecht zu erhalten. Bei Ausfall des Lenkmotors 3 kann der Unterstützungsmotor 2 die Lenkung übernehmen. Es ergibt sich dadurch ein redundantes System.

### Bezugszeichen

- 1: Fahrmotor
- 2: Unterstützungsmotor
- 3: Lenkmotor
- 4: Zentralwelle
- 5: Nullwelle
- 6: Kupplung
- 7: Umkehrzahnrad
- 8: Summierungsgetriebe
- 9: Summierungsgetriebe
- 10: Antriebseinrichtung
- 11: linke Antriebsseite
- 12: rechte Antriebsseite
- 13: Zahnrad
- 14: Zahnrad
- 15: Gelenk
- 16: Gelenk
- 17: Gelenk
- 18: Gelenk
- 19: Zwischenrad
- 20: Zwischenrad
- 21: Hohlrad
- 22: Hohlrad
- 23: Planetenrad
- 24: Planetenrad
- 25: Planetenträger
- 26: Planetenträger
- 27: Antriebswelle
- 28: Antriebswelle
- 29: Sonnenrad
- 30: Sonnenrad
- 31: Zahnrad
- 32: Zahnrad
- 33: Zahnrad
- 34: Zahnrad
- 35: Zahnrad
- 36: Zahnrad
- 37: Zahnrad
- 38: Zahnrad
- 39: Kettenantriebsrad
- 40: Kettenantriebsrad
- 41: Antriebswelle
- 42: Steuereinrichtung
- 43: Steuerleitung
- 44: Fahrtrichtungspfeil

## Patentansprüche

1. Antriebseinrichtung (10) für ein Kettenfahrzeug, wobei die Antriebseinrichtung einen elektrischen Fahrmotor (1) zum Bereitstellen einer Fahrleistung und einen elektrischen Lenkmotor (3) zum Bereitstellen einer Lenkleistung umfasst, und wobei mechanische Antriebselemente (4, 5) zur Übertragung einer Blindleistung zwischen einer rechten Antriebsseite (12) und einer linken Antriebsseite (11) bei Kurvenfahrt vorgesehen sind, wobei ein elektrischer Unterstützungsmotor (2) vorgesehen ist, der wahlweise den Fahrmotor (1) oder den Lenkmotor (3) unterstützen kann, **dadurch gekennzeichnet, dass** die Antriebseinrichtung eine Kupplung (6) aufweist mit welcher der Unterstützungsmotor (2) wahlweise in einer ersten Schaltstellung dem Kraftfluss des Fahrmotors (1) oder in einer zweiten Schaltstellung dem Kraftfluss des Lenkmotors (3) zuschaltbar ist, dass eine mechanische Verbindung der Antriebseinrichtung zwischen der linken und der rechten Antriebsseite (11, 12) eine von dem Fahrmotor (1) antreibbare Zentralwelle (4) und eine von dem Lenkmotor (3) antreibbare Nullwelle (5) umfasst, und dass die über die Zentralwelle (4) und die Nullwelle (5) laufenden Kraftflüsse auf jeder Antriebsseite (11, 12) in jeweils einem Summierungsgetriebe (8, 9) zusammengeführt werden, um über jeweils einen Summierungsgetriebeabtrieb (8, 9) die jeweilige Kette anzutreiben.

2. Antriebseinrichtung (10) nach Anspruch 1, **dadurch gekennzeichnet, dass** die Kupplung (6) neben der ersten Schaltstellung und der zweiten Schaltstellung eine dritte neutrale Schaltstellung aufweist, in der der Unterstützungsmotor (2) vom Rest der Antriebseinrichtung (10) entkoppelt ist.

3. Antriebseinrichtung (10) nach Anspruch 1 oder 2, **dadurch gekennzeichnet, dass** die Kupplung (6) mit einer Synchronisiereinrichtung ausgestattet ist.

4. Antriebseinrichtung (10) nach einem der vorherigen Ansprüche, **dadurch gekennzeichnet, dass** der Lenkmotor (3) an einem Umkehrzahnrad (7) angeordnet ist, das im Kraftfluss zwischen der Nullwelle (5) und einem der beiden Summierungsgetriebe (8, 9) angeordnet ist und die Lenkdrehbewegung der Nullwelle (5) auf der einen Antriebsseite (11) gegenüber der Lenkdrehbewegung auf der anderen Antriebsseite (12) umkehrt.

5. Antriebseinrichtung (10) nach einem der vorherigen Ansprüche, **dadurch gekennzeichnet, dass** der Unterstützungsmotor (2) auf der dem Lenkmotor (3) gegenüberliegenden Antriebsseite (12) angeordnet ist.

6. Antriebseinrichtung (10) nach einem der vorherigen Ansprüche, **dadurch gekennzeichnet, dass** die Kupplung (6) räumlich zwischen einem fest mit der Nullwelle (5) verbundenen Zahnrad und einem im Kraftfluss der Zentralwelle (4) liegenden Zahnrad angeordnet ist.

7. Antriebseinrichtung (10) nach einem der vorherigen Ansprüche, **dadurch gekennzeichnet, dass** die Nullwelle (5) und die Zentralwelle (4) in Fahrtrichtung hintereinander und zumindest nahezu auf gleicher Höhe im Bereich eines Fahrzeugbodens angeordnet sind.

8. Antriebseinrichtung (10) nach einem der vorherigen Ansprüche, **dadurch gekennzeichnet, dass** die Antriebseinrichtung von einer Steuereinrichtung ansteuerbar ist, und dass der Unterstützungsmotor (2) abhängig von einer Lenkhändelstellung und einer Fahrpedalstellung von der Steuereinrichtung über die Kupplung (6) entweder dem Fahrmotor (1) oder dem Lenkmotor (3) zuschaltbar ist.

9. Kettenfahrzeug, **gekennzeichnet durch** eine im Heckbereich des Kettenfahrzeuges angeordnete Antriebseinrichtung (10) nach einem der vorgenannten Patentansprüche.

## Claims

1. Drive device (10) for a tracked vehicle, the drive device comprising an electric traction motor (1) for providing traction power and an electric steering motor (3) for providing steering power, and mechanical drive elements (4, 5) being provided for transmitting idle power between a right-hand drive side (12) and a lefthand drive side (11) when driving around bends, an electric assistance motor (2) being provided which can selectively assist the traction motor (1) or the steering motor (3), **characterized in that** the drive device has a clutch (6), by way of which the assistance motor (2) can selectively be switched in a first switching position into the power flow of the traction motor (1) or in a second switching position into the power flow of the steering motor (3), **in that** a mechanical connection of the drive device between the left-hand and the right-hand drive side (11, 12) comprises a central shaft (4) which can be driven by the traction motor (1) and a zero shaft (5) which can be driven by the steering motor (3), and **in that** the power flows which run via the central shaft (4) and the zero shaft (5) are combined on each drive side (11, 12) in in each case one summing transmission (8, 9), in order to drive the respective track via in each case one summing transmission output (8, 9).

2. Drive device (10) according to Claim 1, characterized that, in addition to the first switching position and the second switching position, the clutch (6) has a third neutral switching position, in which the assistance motor (2) is decoupled from the rest of the drive device (10).

3. Drive device (10) according to Claim 1 or 2, **characterized in that** the clutch (6) is equipped with a synchronizing device.

4. Drive device (10) according to one of the preceding claims, **characterized in that** the steering motor (3) is arranged on a reversing gearwheel (7) which is arranged in the power flow between the zero shaft (5) and one of the two summing transmissions (8, 9) and reverses the steering rotational movement of the zero shaft (5) on the one drive side (11) in comparison with the steering rotational movement on the other drive side (12).

5. Drive device (10) according to one of the preceding claims, **characterized in that** the assistance motor (2) is arranged on the drive side (12) which lies opposite the steering motor (3).

6. Drive device (10) according to one of the preceding claims, **characterized in that** the clutch (6) is arranged spatially between a gearwheel which is connected fixedly to the zero shaft (5) and a gearwheel which lies in the power flow of the central shaft (4).

7. Drive device (10) according to one of the preceding claims, **characterized in that** the zero shaft (5) and the central shaft (4) are arranged behind one another in the driving direction and at least virtually at the same level in the region of a vehicle floor.

8. Drive device (10) according to one of the preceding claims, **characterized in that** the drive device can be actuated by a control device, and **in that** the assistance motor (2) can be switched by the control device via the clutch (6) either into the traction motor (1) or into the steering motor (3) in a manner which is dependent on a steering handle position and an accelerator pedal position.

9. Tracked vehicle, **characterized by** a drive device (10) according to one of the preceding patent claims which is arranged in the rear region of the tracked vehicle.

## Revendications

1. Arrangement de propulsion (10) pour un véhicule à chenilles, dans lequel l'arrangement de propulsion comprend un moteur électrique de propulsion (1) pour fournir une puissance de propulsion et un moteur électrique de direction (3) pour fournir une puissance de direction, et dans lequel il est prévu des éléments de propulsion mécaniques (4, 5) pour la transmission d'une puissance apparente entre un côté de propulsion droit (12) et un côté de propulsion gauche (11) dans un trajet en courbe, dans lequel il est prévu un moteur électrique d'appoint (2), qui peut soutenir au choix le moteur de propulsion (1) ou le moteur de direction (3), **caractérisé en ce que** l'arrangement de propulsion présente un embrayage (6) avec lequel le moteur d'appoint (2) peut être connecté au choix dans une première position d'engagement au flux de force du moteur de propulsion (1) ou dans une deuxième position d'engagement au flux de force du moteur de direction (3), **en ce qu'**une liaison mécanique de l'arrangement de propulsion entre le côté gauche et le côté droit de propulsion (11, 12) comprend un arbre central (4) pouvant être entraîné par le moteur de propulsion (1) et un arbre neutre (5) pouvant être entraîné par le moteur de direction (3), et **en ce que** les flux de force transmis par l'arbre central (4) et par l'arbre neutre (5) sur chaque côté de propulsion (11, 12) sont réunis dans respectivement un mécanisme de sommation (8, 9), afin d'entraîner la chenille respective au moyen d'un arbre de sortie de mécanisme de sommation respectivement (8, 9).

2. Arrangement de propulsion (10) selon la revendication 1, **caractérisé en ce que** l'embrayage (6) présente, en plus de la première position d'engagement et de la deuxième position d'engagement, une troisième position d'engagement neutre, dans laquelle le moteur d'appoint (2) est déconnecté du reste de l'arrangement de propulsion (10).

3. Arrangement de propulsion (10) selon la revendication 1 ou 2, **caractérisé en ce que** l'embrayage (6) est équipé d'un dispositif de synchronisation.

4. Arrangement de propulsion (10) selon l'une quelconque des revendications précédentes, **caractérisé en ce que** le moteur de direction (3) est disposé sur une roue dentée d'inversion (7), qui est disposée dans le flux de force entre l'arbre neutre (5) et un des deux mécanismes de sommation (8, 9) et qui inverse le mouvement rotatif de direction de l'arbre neutre (5) sur un premier côté de propulsion (11) par rapport au mouvement rotatif de direction sur l'autre côté de propulsion (12).

5. Arrangement de propulsion (10) selon l'une quelconque des revendications précédentes, **caractérisé en ce que** le moteur d'appoint (2) est disposé sur le côté de propulsion (12) opposé au moteur de direction (3).

6. Arrangement de propulsion (10) selon l'une quelconque des revendications précédentes, **caractérisé en ce que** l'embrayage (6) est disposé spatialement entre une roue dentée calée sur l'arbre neutre (5) et une roue dentée située dans le flux de force de l'arbre central (4).

7. Arrangement de propulsion (10) selon l'une quelconque des revendications précédentes, **caractérisé en ce que** l'arbre neutre (5) et l'arbre central (4) sont disposés l'un derrière l'autre dans la direction de marche et au moins approximativement à la même hauteur dans la région d'un plancher du véhicule.

8. Arrangement de propulsion (10) selon l'une quelconque des revendications précédentes, **caractérisé en ce que** l'arrangement de propulsion peut être commandé par un dispositif de commande, et **en ce que** le moteur d'appoint (2) peut être connecté par le dispositif de commande, au moyen de l'embrayage (6), soit au moteur de propulsion (1) soit au moteur de direction (3), en fonction de la position d'un levier de direction et de la position d'une pédale d'accélérateur.

9. Véhicule à chenilles, **caractérisé par** un arrangement de propulsion (10) selon l'une quelconque des revendications précédentes, installé dans la région arrière du véhicule à chenilles.
